# EUROPEAN PATENT SPECIFICATION

(11) **EP 2 756 449 B1**
(45) Date of publication and mention of the grant of the patent: **18.11.2015**
(21) Application number: 12762501.0
(22) Date of filing: 12.09.2012
(51) Int. Cl.: G06K 7/14

(54) **POUCH LOCATION DEVICE**
BEUTELORTUNGSVORRICHTUNG
DISPOSITIF D'INSERTION DE POCHES SOUPLES

(30) Priority: 14.09.2011 GB 201115864
(43) Date of publication of application: 23.07.2014
(73) Proprietor: Kraft Foods R & D, Inc., Deerfield, IL 60015 (US)
(72) Inventor: BENTLEY, Andrew, Banbury Oxfordshire OX15 4NR (GB)
(74) Representative: Boult Wade Tennant
(86) International application number: PCT/US2012/054732
(87) International publication number: WO 2013/039955

(56) References cited:
- EP-A1- 1 593 329
- WO-A1-02/28241
- WO-A1-2010/009753
- US-A- 5 974 950

## Description

The present application relates to a pouch location device for a machine for dispensing beverages or foods, and in particular to a device for enabling a soft pouch containing beverage or food ingredients to be accurately located in a bar code reader.

### BACKGROUND

Machines for dispensing beverages are well known. For example, coffee filter machines have been available for many years which combine hot water with ground coffee beans to produce a coffee extract that is then passed through a paper filter into a carafe. Describes one such machine. In more recent times 'on-demand' beverage machines have been marketed which allow for beverages to be produced on an individual basis as required by a user. Examples of such machines include those marketed under the brand names NESPRESSO^{®} by Nestle S.A. and SENSED^{®} by Sara Lee Corporation which allow individual servings of coffee to be produced from individual sealed capsules or flexible bags of ground coffee.

Still more recently, beverage machines allowing for convenient, on demand dispensation of a range of beverage types have been produced, One example of such a system is marketed under the brand name TASSIMO^{®} by Kraft Foods, Inc. This system (as described in EP-A-1440639) utilises a beverage machine that comprises a barcode reader and a range of beverage cartridges wherein each beverage cartridge contains one or more beverage ingredients and is coded with a barcode. In use, the code reader of the beverage machine scans and reads the barcode on a beverage cartridge after it is inserted into the machine and uses information decoded from the barcode to set one or more dispensation parameters of the beverage machine for that dispensation cycle. For each beverage cartridge the manufacturer determines the dispensation parameters and applies the relevant barcode at the point of manufacture. In addition, each beverage cartridge can only be used once.

EP 1593 329 A1 discloses an example of a similar system.

It is known from the development of the prior art system described above that the design of a linear bar code reader can be made simpler, cheaper and more reliable if the bar code is always presented to the scanner in a consistent orientation, with tight positional and rotational tolerances. It is also preferable if the printed bar code is presented under a controlled illumination source and if the printed bar code substrate material is substantially free of dents, ripples or creases. This is particularly important when a two dimensional bar code scanner is used, as it simplifies optical sensor design and significantly reduces the amount of image processing and decoding required. Whilst a number of commercial bar code scanners can be optimised to scan a bar code at any orientation aid distance, this requires complex optics and intensive processor resources.

In addition to machines which utilise cartridges for the preparation of beverages, another proposed type of machine uses beverage and food ingredients packed in soft laminate pouches (also known as stick packs). Such pouches are advantageous as they provide sustainable packaging with minimal waste. However such pouches are extremely pliable and therefore have few features which would enable the pouch to be reliably located relative to the bar reader. It is therefore particularly difficult to create the optimal reading witch a soft flexible pouch due to the inherent poor stiffness thereof.

US-A-2004/0046025 describes a card scanner for reading 1D or 2D bar codes on a rigid or semi-rigid card, such as a credit card, which is manually inserted into a slot reader. The reader laterally constraints the card as it enters the slot and employs a line by line approach to gradually building up an image of the code as it is manually moved across the linear image sensor. A spring loaded hinged pressure plate engages with the card upon entry and a series of protrusions on the plate press the card against the window of a contact image sensor to guarantee a fixed reading distance and to compensate for curvature in the card. However, this device is only suitable for reading the codes on rigid cards and not for resolving the problem identified above with soft flexible pouches.

One object of the present disclosure is to provide a pouch locating device for a machine for dispensing beverages or foods into which the user can insert a soft pouch, which contains beverage of food ingredients and is provided with a machine readable code, for reliable decoding.

A further object is to provide a machine for dispensing beverages or foods incorporating such a device in which, if the pouch is successfully decoded, the device generates a signal which can be used, for example, to activated the optimal beverage preparation cycle, or to open a hatch to enable the contents of the pouch to be poured in ready for beverage or food preparation, or to oxen the pouch.

### SUMMARY OF THE DISCLOSURE

The disclosure therefore provides a pouch location device for a beverage or food preparation machine comprising a slot for receiving at least an end of a flexible pouch, said slot having an entry aperture at one end, vend wall at the opposing end, a substantially transparent window defining the top of the slot, a spring biased platen defining the base of the slot, wherein the platen defines the lower lip of the entry aperture and is angled to taper the slot towards the end wall.

Preferably the platen is formed by a sprung cantilever or a hinged plate.

Spring means are preferably located beneath the plate which may comprise a leaf spring or a helical spring,

Preferably, a position sensor configured to sense whether a pouch is correctly located within the slot,

The disclosure further provides a beverage or food preparation machine comprising the aforementioned pouch location device and an image sensor located tin the vicinity of the window to enable a machine readable code on a pouch inserted in the slot to be read, wherein the image sensor generates a signal according to information read from the code on the pouch.

A control system is preferably provide which receives the signal generated by the image sensor and controls operation of the machine according to the nature of the signal.

The image sensor is preferably a 2D bar code reader.

The pouch location device may be mounted within the machine at an angle in the range of 30 to 60 degrees to the horizontal and preferably at 45 degrees preferably a lighting source is provided in the vicinity of the window.

The machine may further comprise cutting means which are activated by the signal generated by the reader, to cut an end off a pouch located in the pouch location device.

The disclosure further provides a system for preparing beverage or food comprising the aforementioned machine and at least one pouch containing beverage or food ingredients bearing a machine readable code.

The machine readable code is preferably a 2D bar code.

The disclosure further provides a method of preparing a beverage or food product using the aforementioned system comprising the steps of selecting a pouch, bearing a machine readable code containing information regarding the pouch contents, inserting the pouch into the pouch location device to enable the code on the pouch to be read by the image sensor, pouring the contents of the pouch into a preparation chamber in the machine, and activating the machine to enable liquid to be supplied to the chamber so as to form the beverage or food product.

The machine is preferably activated by an appropriate signal generated by the image sensor.

The chamber is only opened by an appropriate signal generated by the image sensor,

The pouch location device therefore constrains, locates and flattens the code against the underside of a reading window which enables shadow-free illumination and greatly improves reading reliability. The resulting spring-assisted action feels natural, intuitive and provides positive force feedback to the user, temporarily stiffening the flexible pouch to assist with its manipulation.

This arrangement is particularly convenient as it enables single handed operation to locate and temporarily constrain the pouch during the scanning process. It also removes the influence of external light levels and enables controlled illumination.

The advantage of using a spring loaded platen makes the location device tolerant of pouches with different fill weights and pressures. It also provides tactile feedback for the user and automatically compensates when a user pushes too hard against the end stop.

When using a cost-reduced linear bar code reader it is necessary to constrain the bar code in a fixed position with known tolerances along its length in order to simplify the scanner design and to guarantee reliable scanning. Whilst this is simple with a rigid pack format that is clamped during brewing, like the aforementioned cartridges, it is more difficult with a flexible pouch. For 2D bar codes, accurate location and constraint of the bar code pattern is doubly important as two axes are being scanned. Thus, she use of the location device increases the bar code reader reliability due to the accurate location of the bar code under the scanner window in the slot and by smoothing the pouch material to make it substantially free of dents, ripples or creases in the bar code region.

The pouch location device is thus a locating mechanism that provides the benefits of;
- accurately and reliably locating and registering the pouch bar code under the scanner window which enables a simple low cost 2D bar code scanner to be used;
- partially stiffening the pack as it is progressively entered into the slot and flattening the bar code against the window in the scanning region to improve read reliability;
- compensating for variations in pack volume, fill weight, and gas head space.
- providing positive feedback to the user when inserting a soft pouch into a blind slot up to an end stop;
- compensating for the user pushing the pouch too hard against the locating end stop and buckling the pouch.

One embodiment of the pouch location device of the present disclosure will now be described, by way of example only, with reference to the accompanying drawings, in which:-

### DESCRIPTION OF THE DRAWINGS

Figures 1 and 2 are perspective views of a beverage preparation machine incorporating a pouch location device;
Figures 3a and 3b are side elevations of one embodiment of a pouch location device with a pouch inserted therein;
Figure 3c is a side elevation of the pouch location device of Figures 3a and 3b set at an angle within a beverage preparation machine; and
Figures 4a to 4d are perspective views of the pouch location device of Figures 3a and 3b showing a pouch at different stages of insertion.

### DETAILED DESCRIPTION

This disclosure relates to a pouch location device for use with an image sensor, such as a bar code scanner, in a machine for dispensing beverages or foods. The device enables accurate registration of a flexible pouch containing food or beverage ingredients and the machine readable code thereon, when it is inserted into the pouch location device.

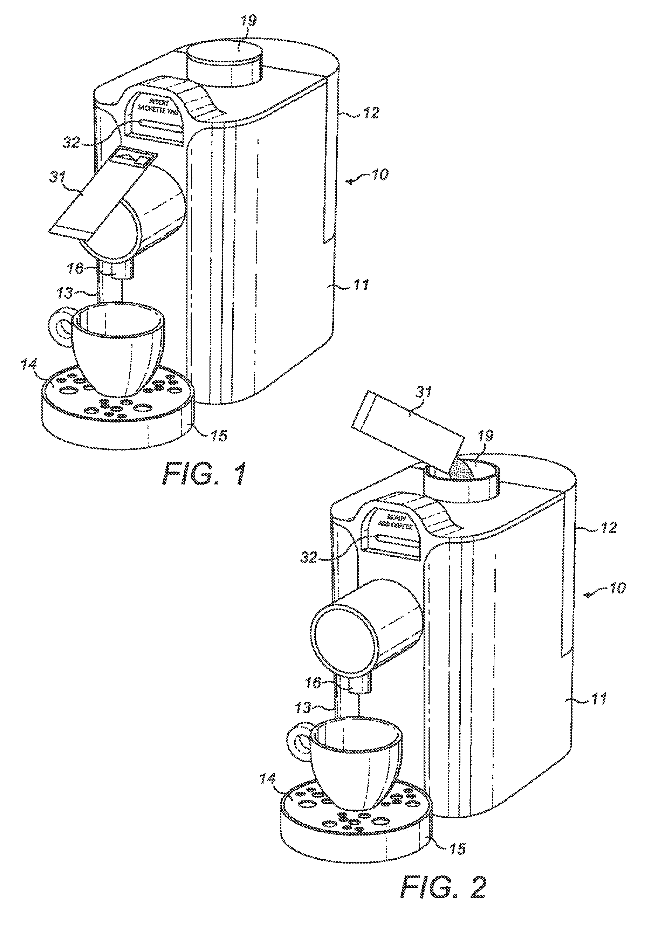

Figures 1 and 2 illustrate one type of beverage dispensing machine 10 which the device is suitable for use with. The beverage dispensing machine 10 generally comprises a housing 11, a tank 12, a water heater, a beverage preparation chamber and a pump for pumping water from the tank 12 to the chamber via the heater. The front of the housing 11 defines a dispensing station 13 where dispensation of the beverage takes place, which includes a cup stand 14 with a drip tray 15 located beneath. The dispensing station 13 includes a beverage outlet 16, which communicates with the beverage preparation chamber, through the prepared beverage is dispensed.

Also located in the front of the housing 11 is an inlet aperture 32 of a recessed pouch entry slot 17, into which a leading end of a pouch 31 is to be inserted.

An aperture 19 is located at the top of the housing 11, which communicates with the chamber. The aperture 19 preferably includes access means for opening and closing the aperture 19.

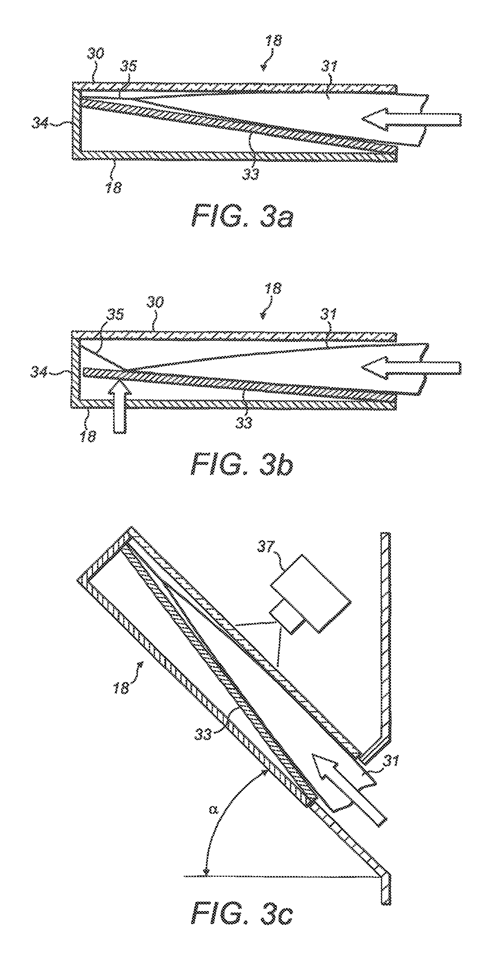

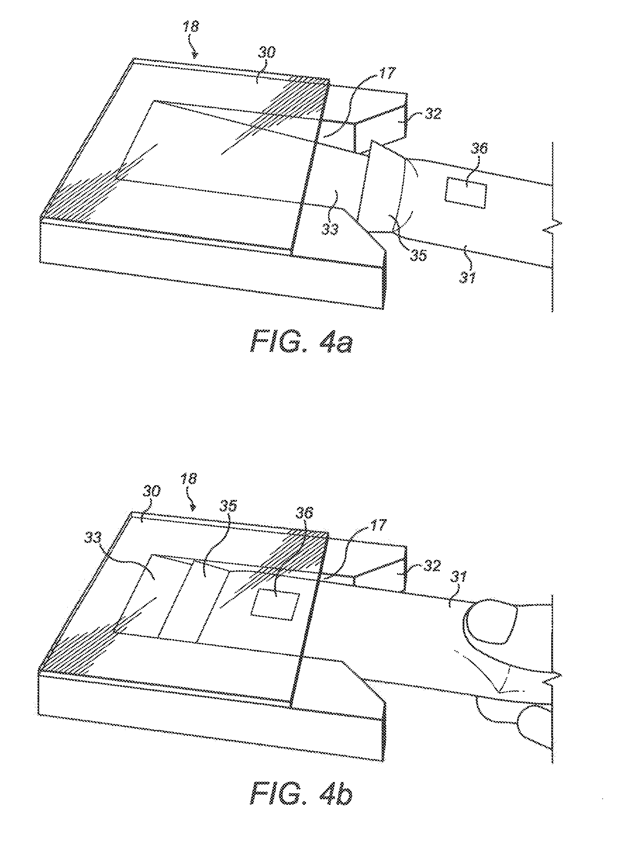

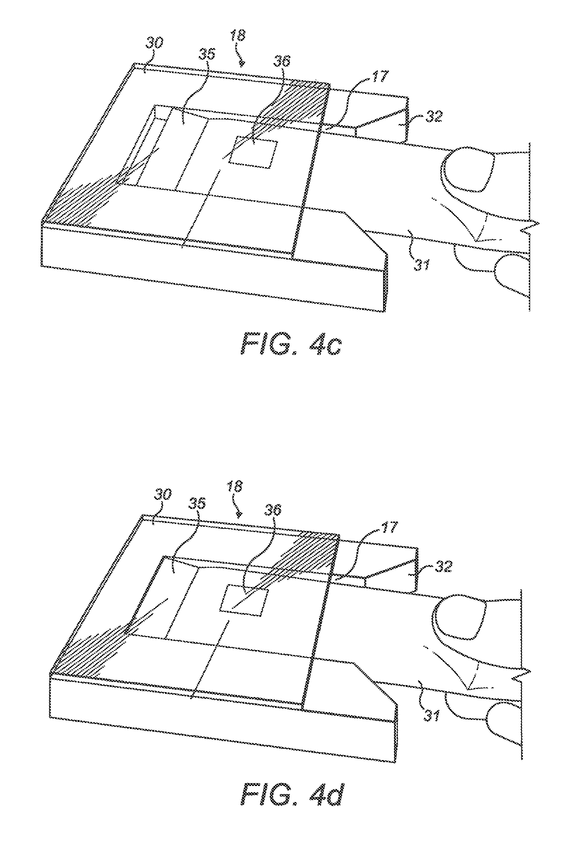

One embodiment of the pouch location device 18 is shown in Figures 3 and 4. The pouch location device 18 comprises a substantially transparent rigid plate providing a scanning window 30 defining the top of the pouch entry slot 17. The plate may be of toughened glass, perspex or another suitable material which is resistant to abrasion. The width of the slot 17 is selected to suit the dimensions of the pouch 31 and the inlet aperture 32 to the slot 17 preferably has tapered edges to promote easy insertion of the pouch 31 into the slot 17. Preferably the slot 17 is 1 to 3mm wider than the maximum width of the pouch 31. An end wall 34 of the pouch location device 18 defines the end of the slot 17. In the base of the pouch location device 18 is a light sprung platen 33. The platen 33 defines the bottom of the slot 17, and tapers in an upward direction from the inlet aperture 32 towards the end wall 34. The platen 33 may be made from a thin sheet of resilient material, such as polycarbonate, which is folded to create a sprung cantilever. Alternatively it may be a metal or plastic plate, hinged at the entry to the slot 17 with a spring, such as a helical or a leaf spring, mounted underneath the platen 33.

The pouch location device 18 is preferably mounted in the machine 10 at an angle in the range of 30 to 60 degrees to the horizontal, preferably 45 degrees. The angle is selected to be sufficiently steep to encourage the contents of the pouch 31 to fall towards the trailing end of the pouch 31 (i.e. the opposite end to the leading end which is inserted into the aperture 32) whilst still allowing room for mounting an image sensor 37 above the device 18.

The image sensor 37 is focused onto the scanning window 30. The image sensor 37 may be a conventional 2D bar code scanner or a miniature CMOS (complementary metal-oxide-semiconductor) sensor with a short focal distance, which is typically less than 25mm. A suitable image sensor 37 is made by Omnivision Technologies Inc.

The pouch location device 18 is preferably provided with a detection switch or sensor which will sense when the pouch 31 is in the correct place for scanning, and to ensure that the platen 33 is not over depressed. Sensing if the platen 33 is overdepressed enables the control system of the machine 10 to issue a warning to the user to relax their grin, thus helping to reduce the need for a repeat scan.

The pouch location device 18 is intended for use with a pouch 31 having at least one end seam 35 (typically formed by a suitable welding or sealing process) at the leading end and which contains beverage or food ingredients, which may be in dry or liquid form. Suitable materials for the pouch 31 include flexible plastic laminates comprising layers of polyester, aluminium and polypropylene. The width of the pouch 31 may be in the range of 15mm to 75mm and more preferably in the range of 25mm to 50mm; and the length may be in the range of 75mm to 200mm, and preferably in the range of 120mm to 160mm. However the dimensions of the pouch 31 depend on the quantity of Ingredients which the pouch 31 is required to hold.

The pouch 31 bears a machine readable code 36, on one surface. Preferably the code 36 is a bar code printed on the pouch 31 using an encrypted 2D bar code. However the code 36 may be any monochrome or colour printed symbology which carries encoded Information and is machine readable. The code 36 may be overt or covert. Covert images may be printed using, for example, infrared or ultraviolet inks.

When a beverage or food is to be prepared the user inserts a pouch 31 (Figure 4a) into the aperture 32. As the pouch 31 passes into the slot 17 it engages against the spring-loaded platen 33 and the user feels an initial resistance as the pressure in the pouch 31 rises slightly. It is a natural reaction for the user, at this point to push the pouch 31 against this resistance and an attempt to do so, by grasping the pouch 31 harder, causes the leading end to inflate and stiffen, gently depressing the spring-loaded platen 33 and enabling entry. Other attempts at entry, for example by simply pushing the pouch 31 from the trailing end, are not as successful because the pouch 31 tends to buckle or fold and it is soon learned that grasping and squeezing the pouch 31 is the best way to ease it into to slot 17.

As the pouch 31 is further inserted into the slot 17 (Figure 4b), the pressure in the pouch 31 rises a little more and gives the user positive feedback, in that it becomes slightly stiffer and easier to manipulate. As a result of this action the code 36 is pressed flat against the scanning window 30, thereby conveniently removing any surface irregularities or creases in this critical area.

Finally, as the pouch 31 depresses the platen 33 further (Figures 3a and 4c) the end seam 35 at the leading end of the pouch 31 meets the end wall 34 of the slot 17 and this acts as a physical barrier to further entry. If an unsupported pouch 31 were to be pushed against a wall, then the end seam 35 would simply fold over with the loss of registration. However, when pushed into the pouch location device 18, the end seam 35 is supported by a combination of the tapered platen 33, the slot side walls and the self-stiffening of the pouch 31. The user thus receives positive indication that the pouch 31 is located up against the end wall 34 in the pouch location device 18 and should stop applying force. If, however the user continues to apply excessive force after the pouch 31 meets the end wall 34 then the platen 33 is depressed downwards (Figures 3b and 4d) and the stored energy helps restores the pouch shape after the user releases it.

Once correctly located the scanner scans the code 36 through the window 30 and generates a signal according to the information read from the code 36. This signal may be used in a number of different ways, for example to switch the machine 10 on, to select the optimal beverage preparation program according to the nature of the ingredients in the pouch 31, to open the access means closing off the aperture 19 to enable the user to pour the contents of the pouch 31 into the beverage preparation chamber. The machine 10 can also be programmed to only operate for "approved" pouches 31, i.e. those with recognised codes.

The aperture 32 to the slot 17 is preferably oriented in a horizontal position, with the slot 17 operating at 45 to 60 degrees to the horizontal. This helps to prevent the accumulation of foreign matter in the slot 17 and encourages the contents of the pouch 31 to fall to its trailing end just before entry. This makes it easier to insert the pouch 31 and enables the feature described in the following paragraph to be used.

The pouch contents are then poured into a suitable chamber in the machine 10 and the machine activated to enable water to enter the chamber to prepare the beverage or food product.

The pouch location device 18 may also be provided with a guillotine, or other cutting means, which is activated once the appropriate signal is generated by the bar code reader, to cut the end seam 35 off the pouch 31, thereby making it easy for the user to pour the pouch contents into the chamber in the machine 10.

The pouch location device 18 may also be provided with a lighting source, such as LEDs, which provide controlled illumination to optimise the reading process. The lighting source is located in the vicinity of the window 30.

Although water is likely to be the most common liquid used in preparing beverages such as coffee, the machine 10 is also capable of handling other liquids, such as milk or milk preparations, for mixing with the beverage ingredients. Any references herein to water should also be taken to include any form of liquid used in preparing beverages.

Although this system is particularly suitable for machines for preparing beverages, such as coffee, tea, hot chocolate and the like, it is also suitable for preparing liquid food products, such as soup. Any preferences herein to beverages should also be taken to include any form of liquid food products.

## Claims

1. A pouch location device (18) for a beverage or food preparation machine (10) comprising a slot (17) for receiving at least an end of a flexible pouch (31), said slot (17) having an entry aperture (32) at one end, an end wall (34) at the opposing end, a substantially transparent window (30) defining the top of the slot, a spring biased platen (33) defining the base of the slot (17), wherein the platen (33) defines the lower lip of the entry aperture (32) and is angled to taper the slot (17) towards the end wall (34).

2. A pouch location device (18) as claimed in claim 1 in which the platen (33) is formed by a sprung cantilever or a hinged plate.

3. A pouch location device (18) as claimed in claim 2 in which spring means are located beneath the plate, said spring means comprising a leaf spring or a helical spring.

4. A pouch location device (18) as claimed in any one of the preceding claims further comprising a position sensor configured to sense whether a pouch (31) is correctly located within the slot (17).

5. A beverage or food preparation machine (10) comprising the pouch location device (18) of any one of claims 1 to 4 and an image sensor (37) located in the vicinity of the window (30) to enable a machine readable code (36) on a pouch (31) inserted in the slot (17) to be read, wherein the image sensor generates a signal according to information read from the code (36) on the pouch (31).

6. A beverage or food preparation machine (10) as claimed in claim 5 further comprising a control system which receives the signal generated by the image sensor (39) and controls operation of the machine (10) according to the nature of the signal.

7. A beverage or food preparation machine (10) as claimed in claim 5 or claim 6 wherein the image sensor (37) is a 2D bar code reader.

8. A beverage or food preparation machine (10) as claimed in any one of claims 5 to 7 in which the pouch location device (18) is mounted within the machine (10) at an angle in the range of 30 to 60 degrees to the horizontal and preferably at 45 degrees.

9. A beverage or food preparation machine (10) as claimed in any one of claims 5 to 8 further comprising a lighting source in the vicinity of the window (30).

10. A beverage or food preparation machine (10) as claimed in any one of claims 5 to 9 further comprising cutting means which are activated by the signal generated by the reader, to cut an end off a pouch (31) located in the pouch location device (18).

11. A system for preparing beverage or food (10) comprising the machine (10) as claimed in any one of claims 5 to 10 and at least one pouch (31) containing beverage or food ingredients bearing a machine readable code (36).

12. A system as claimed in claim 11 wherein the machine readable code (36) is a 2D bar code.

13. A method of preparing a beverage or food product using the system as claimed in claim 11 or claim 12 comprising the steps of:
selecting a pouch (31) bearing a machine readable code (36) containing information regarding the pouch contents;
inserting the pouch (31) into the pouch location device (18) to enable the code (36) on the pouch (31) to be read by the image sensor (37);
pouring the contents of the pouch (31) into a preparation chamber in the machine (10); and
activating the machine (10) to enable liquid to be supplied to the chamber so as to form the beverage or food product.

14. A method as claimed in claim 13 wherein the machine is activated by an appropriate signal generated by the image sensor.

15. A method as claimed in claim 13 wherein the chamber is only opened by an appropriate signal generated by the image sensor.

## Patentansprüche

1. Beutellokalisierungsvorrichtung (18) für einen Getränke- oder Speisenzubereitungsautomaten (10), die einen Schlitz (17) zur Aufnahme zumindest eines Endes eines flexiblen Beutels (31) aufweist, wobei der Schlitz (17) an einem Ende eine Zugangsöffnung (32), an dem gegenüberliegenden Ende eine Abschlusswand (34), ein im Wesentlichen transparentes Fenster (30), das die Oberseite des Schlitzes begrenzt, und eine mit einer Feder vorgespannte Platte (33) aufweist, die den Boden des Schlitzes (17) festlegt, wobei die Platte (33) den unteren Rand der Zugangsöffnung (32) festlegt und so unter einem Winkel angeordnet ist, dass sich der Schlitz (17) in Richtung Abschlusswand (34) verjüngt.

2. Beutellokalisierungsvorrichtung (18) nach Anspruch 1, bei der die Platte (33) von einem gefederten Träger oder einer Schwenkplatte gebildet wird.

3. Beutellokalisierungsvorrichtung (18) nach Anspruch 2, bei der sich die Federeinrichtung unterhalb der Platte befindet und wobei die Federeinrichtung eine Blattfeder oder eine Schraubenfeder umfasst.

4. Beutellokalisierungsvorrichtung (18) nach einem der vorhergehenden Ansprüche, die ferner einen Positionssensor aufweist, der dazu ausgebildet ist, eine korrekte Positionierung eines Beutels (31) in dem Schlitz (17) zu erfassen.

5. Getränke- oder Speisenzubereitungsautomat (10), der die Beutellokalisierungsvorrichtung (18) nach einem der Ansprüche 1 bis 4 sowie einen Bildsensor (37) aufweist, der in der Nähe des Fensters (30) angeordnet ist, damit ein maschinenlesbarer Code (36) an einem in den Schlitz (17) eingeführten Beutel (31) gelesen werden kann, wobei der Bildsensor ein Signal erzeugt, das einer aus dem Code (36) auf dem Beutel (31) gelesenen Information entspricht.

6. Getränke- oder Speisenzubereitungsautomat (10) nach Anspruch 5, der ferner ein Steuersystem aufweist, das das von dem Bildsensor (39) erzeugte Signal empfängt und den Funktionsablauf des Automaten (10) in Abhängigkeit von der Art des Signals steuert.

7. Getränke- oder Speisenzubereitungsautomat (10) nach Anspruch 5 oder Anspruch 6, worin der Bildsensor ein 2D-Barcodeleser ist.

8. Getränke- oder Speisenzubereitungsautomat (10) nach einem der Ansprüche 5 bis 7, worin die Beutellokalisierungsvorrichtung (18) innerhalb des Automaten (10) unter einem Winkel aus dem Bereich von 30 bis 60 Grad gegenüber der Horizontalen und vorzugsweise unter einem Winkel von 45 Grad angebracht ist.

9. Getränke- oder Speisenzubereitungsautomat (10) nach einem der Ansprüche 5 bis 8, der in der Nähe des Fensters (30) ferner eine Beleuchtungsquelle aufweist.

10. Getränke- oder Speisenzubereitungsautomat (10) nach einem der Ansprüche 5 bis 9, der ferner eine Schneideinrichtung aufweist, die durch das von dem Leser erzeugte Signal aktiviert wird, um ein Ende eines in der Beutellokalisierungsvorrichtung (18) angeordneten Beutels (31) abzuschneiden.

11. System (10) zur Getränke- oder Speisenzubereitung, das einen Automaten (10) nach einem der Ansprüche 5 bis 10 und zumindest einen Beutel (31) umfasst, der Getränke- oder Speisezutaten enthält und auf den ein maschinenlesbarer Code (36) aufgebracht ist.

12. System nach Anspruch 11, worin der maschinenlesbare Code (36) ein 2D-Barcode ist.

13. Verfahren zur Zubereitung eines Getränks oder einer Speise unter Verwendung des Systems nach Anspruch 11 oder Anspruch 12, wobei das Verfahren Schritte aufweist zum:
Wählen eines Beutels (31), auf den ein maschinenlesbarer Code (36) aufgebracht ist, der Information in Bezug auf den Beutelinhalt umfasst;
Einführen des Beutels (31) in die Beutellokalisierungsvorrichtung (18), damit der Code (36) auf dem Beutel (31) durch den Bildsensor (37) gelesen werden kann;
Schütten des Inhalts des Beutels (31) in eine Zubereitungskammer des Automaten (10); und
Aktivieren des Automaten (10), damit der Kammer zur Zubereitung des Getränks oder der Speise Flüssigkeit zugeführt werden kann.

14. Verfahren nach Anspruch 13, worin der Automat durch ein von dem Bildsensor erzeugtes geeignetes Signal aktiviert wird.

15. Verfahren nach Anspruch 13, worin die Kammer ausschließlich durch ein von dem Bildsensor erzeugtes geeignetes Signal geöffnet wird.

## Revendications

1. Dispositif de placement de poche (18) pour une machine de préparation de boisson ou d'aliment (10) comprenant une fente (17) pour recevoir au moins une extrémité de la poche souple (31), ladite fente (17) comprenant une ouverture d'entrée (32) au niveau d'une extrémité, une paroi d'extrémité (34) au niveau de l'extrémité opposée, une fenêtre sensiblement transparente (30) définissant le sommet de la fente, un plateau sollicité par ressort (33) définissant la base de la fente (17), dans lequel le plateau (33) définit le bord inférieur de l'ouverture d'entrée (32) et est incliné pour effiler la fente (17) en direction de la paroi d'extrémité (34).

2. Dispositif de placement de poche (18) selon la revendication 1 dans lequel le plateau (33) est formé par un élément en porte-à-faux à ressort ou une plaque articulée.

3. Dispositif de placement de poche (18) selon la revendication 2 dans lequel des moyens du type ressort sont situés sous la plaque, lesdits moyens du type ressort comprenant un ressort à lames ou un ressort hélicoïdal.

4. Dispositif de placement de poche (18) selon l'une quelconque des revendications précédentes comprenant en outre un capteur de position conçu pour détecter si oui ou non une poche (31) est correctement placée à l'intérieur de la fente (17).

5. Machine de préparation de boisson ou d'aliment (10) comprenant le dispositif de placement de poche (18) selon l'une quelconque des revendications 1 à 4 et un capteur d'image (37) situé dans le voisinage de la fenêtre (30) pour permettre la lecture d'un code lisible par machine (36) sur une poche (31) insérée dans la fente (17), dans laquelle le capteur d'image génère un signal conformément aux informations lues à partir du code (36) sur la poche (31).

6. Machine de préparation de boisson ou d'aliment (10) selon la revendication 5 comprenant en outre un système de commande qui reçoit le signal généré par le capteur d'image (39) et commande le fonctionnement de la machine (10) selon la nature du signal.

7. Machine de préparation de boisson ou d'aliment (10) selon la revendication 5 ou la revendication 6, dans laquelle le capteur d'image (37) est un lecteur de code-barres 2D.

8. Machine de préparation de boisson ou d'aliment (10) selon l'une quelconque des revendications 5 à 7, dans laquelle le dispositif de placement de poche (18) est monté à l'intérieur de la machine (10) selon un angle compris dans la plage de 30 à 60 degrés par rapport à l'horizontale et de préférence de 45 degrés.

9. Machine de préparation de boisson ou d'aliment (10) selon l'une quelconque des revendications 5 à 8 comprenant en outre une source d'éclairage dans le voisinage de la fenêtre (30).

10. Machine de préparation de boisson ou d'aliment (10) selon l'une quelconque des revendications 5 à 9 comprenant en outre des moyens de coupe qui sont activés par le signal généré par le lecteur, pour couper une extrémité d'une poche (31) située dans le dispositif de placement de poche (18).

11. Système de préparation de boisson ou d'aliment (10) comprenant la machine (10) selon l'une quelconque des revendications 5 à 10 et au moins une poche (31) contenant des ingrédients de la boisson ou de l'aliment portant un code lisible par machine (36).

12. Système selon la revendication 11, dans lequel le code lisible par machine (36) est un code-barres 2D.

13. Procédé de préparation d'une boisson ou d'un aliment utilisant le système selon la revendication 11 ou la revendication 12 comprenant les étapes suivantes :
la sélection d'une poche (31) portant un code lisible par machine (36) contenant des informations concernant le contenu de la poche ;
l'insertion de la poche (31) dans le dispositif de placement de poche (18) pour permettre la lecture du code (36) sur la poche (31) par le capteur d'image (37) ;
le versement du contenu de la poche (31) dans une chambre de préparation dans la machine (10) ; et
l'activation de la machine (10) pour permettre la fourniture du liquide dans la chambre de manière à former la boisson ou l'aliment.

14. Procédé selon la revendication 13, dans lequel la machine est activée par un signal approprié généré par le capteur d'image.

15. Procédé selon la revendication 13, dans lequel la chambre est seulement ouverte par un signal approprié généré par le capteur d'image.
